(19) **Europäisches Patentamt European Patent Office Office européen des brevets**

(11) **EP 4 782 091 A1**

(12) **EUROPEAN PATENT APPLICATION**
published in accordance with Art. 153(4) EPC

(43) Date of publication:
29.07.2026 Bulletin 2026/31

(21) Application number: 24868293.2

(22) Date of filing: 18.09.2024

(51) International Patent Classification (IPC):
*B01D 53/22* (2006.01)   *B01D 65/00* (2006.01)
*B01D 69/00* (2006.01)   *B01D 71/56* (2006.01)
*B01D 71/80* (2006.01)

(52) Cooperative Patent Classification (CPC):
**B01D 53/22; B01D 65/00; B01D 69/00;
B01D 71/56; B01D 71/80**

(86) International application number:
**PCT/JP2024/033361**

(87) International publication number:
**WO 2025/063216 (27.03.2025 Gazette 2025/13)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: 22.09.2023  JP 2023159198
06.03.2024  JP 2024034071

(71) Applicant: **Nitto Denko Corporation
Osaka 567-8680 (JP)**

(72) Inventors:
• **KATAGIRI, Makoto
  Ibaraki-shi, Osaka 567-8680 (JP)**
• **NAKAMURA, Yoshihiro
  Ibaraki-shi, Osaka 567-8680 (JP)**

(74) Representative: **Hoffmann Eitle
Patent- und Rechtsanwälte PartmbB
Arabellastraße 30
81925 München (DE)**

(54) **GAS SEPARATION SYSTEM AND METHOD FOR SEPARATING MIXED GAS**

(57)   The present invention provides a gas separation system suitable for efficiently separating a gas mixture. The gas separation system 100 according to the present invention includes: a separation membrane unit 10 that separates a gas mixture 70 into a permeated gas 80 and a non-permeated gas 81; and a sweep gas feed passage 36 configured to supply a portion of the non-permeated gas 81 to a permeation space of the separation membrane unit 10 as a sweep gas 75. The gas separation system 100 recovers a recovery gas 85 containing the permeated gas 80 and the sweep gas 75.

FIG.1

**Description**

TECHNICAL FIELD

The present invention relates to a gas separation system and a gas mixture separation method.

BACKGROUND ART

At chemical plants and the like that manufacture chemical products, for example, gas mixtures containing carbon dioxide, hydrogen, and the like are discharged. From the viewpoints of, for example, environmental regulation and effective use of resources, it is desirable to separate each component from a gas mixture and recover them.

A membrane separation method has been developed as a method for separating each component from a gas mixture. The membrane separation method allows efficient separation of each component with a suppressed operation cost, compared with an absorption method according to which a specific component contained in a gas mixture is separated by absorption by an absorbent.

In the membrane separation method, a difference between a partial pressure of a separation target component in a feed space of a separation membrane unit and that in a permeation space of the separation membrane unit is used as a driving force. Examples of the method for increasing this partial pressure difference include a method including supplying a pressurized gas mixture to the feed space (pressurization method), a method including depressurizing the permeation space (vacuum method), and a method including supplying a sweep gas with a low separation target component content to the permeation space (sweep method). Patent Literature 1 discloses a membrane separation method employing the sweep method.

CITATION LIST

Patent Literature

Patent Literature 1: JP 2015-536814 A

SUMMARY OF INVENTION

Technical Problem

The sweep method is suitable for improving the recovery rate of a separation target component without greatly increasing the membrane area of a separation membrane included in a separation membrane unit. However, according to studies by the present inventors, the conventional sweep method has room for further improvement in terms of efficiently separating a gas mixture.

Hence, the present invention aims to provide a gas separation system suitable for efficiently separating a gas mixture.

Solution to Problem

The present invention provides a gas separation system including:

a separation membrane unit that separates a gas mixture into a permeated gas and a non-permeated gas; and
a sweep gas feed passage configured to supply a portion of the non-permeated gas to a permeation space of the separation membrane unit as a sweep gas, wherein
the gas separation system is configured to recover a recovery gas containing the permeated gas and the sweep gas.

The present invention further provides a gas mixture separation method including:

supplying a gas mixture to a separation membrane unit to separate the gas mixture into a permeated gas and a non-permeated gas;
supplying a portion of the non-permeated gas to a permeation space of the separation membrane unit as a sweep gas; and
recovering a recovery gas containing the permeated gas and the sweep gas.

Advantageous Effects of Invention

According to the present invention, a gas separation system suitable for efficiently separating a gas mixture can be provided.

BRIEF DESCRIPTION OF DRAWINGS

FIG. 1 is a schematic configuration diagram showing a gas separation system according to one embodiment of the present invention.
FIG. 2 is a schematic cross-sectional view showing an example of a separation membrane unit.
FIG. 3A is a cross-sectional view schematically showing an example of a separation membrane.

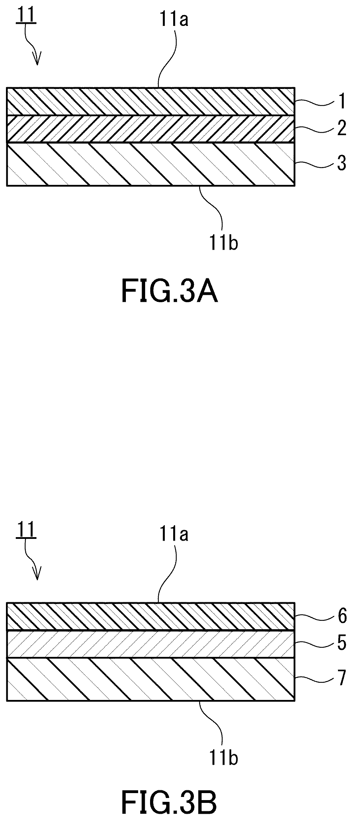

FIG. 3 is a cross-sectional view schematically showing another example of a separation membrane.

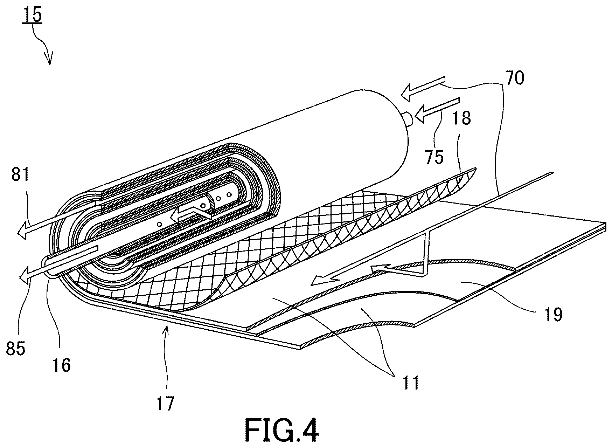

FIG. 4 is a schematic cross-sectional view showing another example of a separation membrane unit.

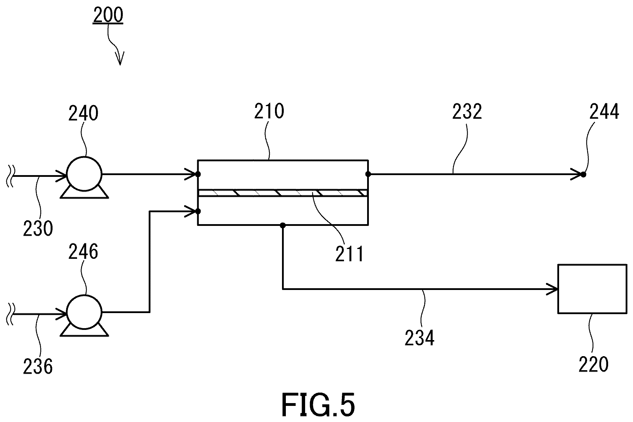

FIG. 5 is a schematic configuration diagram for describing a conventional gas separation system.

DESCRIPTION OF EMBODIMENTS

A gas separation system according to a first embodiment of the present invention includes:

a separation membrane unit that separates a gas mixture into a permeated gas and a non-permeated gas; and
a sweep gas feed passage configured to supply a portion of the non-permeated gas to a permeation space of the separation membrane unit as a sweep gas, wherein
the gas separation system is configured to recover a recovery gas containing the permeated gas and the sweep gas.

According to a second aspect of the present invention, for example, in the gas separation system according to the first aspect, a proportion of a flow rate ($m^3$/h) of the sweep gas to a flow rate ($m^3$/h) of the gas mixture supplied to the separation membrane unit is 6.0% or more.
According to a third aspect of the present invention, for example, in the gas separation system according to the first or second aspect, a proportion of a flow rate ($m^3$/h) of the sweep gas to a flow rate ($m^3$/h) of the recovery gas is 19% or more.
According to a fourth aspect of the present invention, for example, in the gas separation system according to any one of the first to third aspects, the gas mixture contains a gas A, and the permeated gas has a higher content of the gas A than the non-permeated gas.
According to a fifth aspect of the present invention, for example, in the gas separation system according to the fourth aspect, a content of the gas A in the gas mixture is 30 vol% or less.
According to a sixth aspect of the present invention, for example, in the gas separation system according to the fourth or fifth aspect, a recovery rate of the gas A by the recovery gas is 70% or more.
According to a seventh aspect of the present invention, for example, in the gas separation system according to any one of the fourth to sixth aspects, the gas A is carbon dioxide or hydrogen.
According to an eighth aspect of the present invention, for example, in the gas separation system according to any one of the first to seventh aspects, a content of water vapor in the recovery gas is 1 vol% or less.
According to a ninth aspect of the present invention, for example, the gas separation system according to any one of the first to eighth aspects further includes a discharge passage connected to the separation membrane unit and configured to discharge the non-permeated gas from the separation membrane unit, wherein the sweep gas feed passage branches from the discharge passage.
According to a tenth aspect of the present invention, for example, the gas separation system according to any one of the first to ninth aspects further includes: a recovery portion configured to recover the recovery gas; and a recovery passage connected to the separation membrane unit and the recovery portion and configured to deliver the recovery gas to the recovery portion.
According to an eleventh aspect of the present invention, for example, the gas separation system according to any one of the first to tenth aspects further includes a gas mixture feed passage connected to the separation membrane unit and configured to supply the gas mixture to the separation membrane unit, wherein the gas mixture feed passage is provided with a pressurizing device that increases a pressure of the gas mixture.
According to a twelfth aspect of the present invention, for example, in the gas separation system according to any one of the first to eleventh aspects, the separation membrane unit includes a separation membrane, and the separation membrane includes a separation functional layer including: a polyether block amide resin; or an ionic liquid.

A gas mixture separation method according to a thirteenth aspect of the present invention includes:

supplying a gas mixture to a separation membrane unit to separate the gas mixture into a permeated gas and a non-permeated gas;

supplying a portion of the non-permeated gas to a permeation space of the separation membrane unit as a sweep gas; and

recovering a recovery gas containing the permeated gas and the sweep gas.

The present invention will be described below in detail. The following description is not intended to limit the present invention to a specific embodiment.

<Gas Separation System>

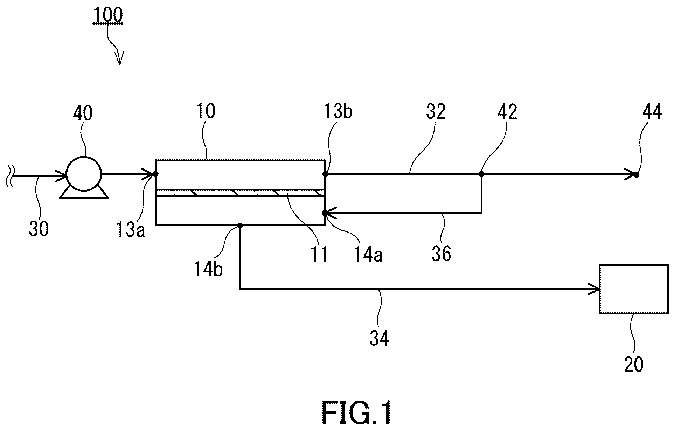

As shown in FIG. 1, a gas separation system 100 according to the present embodiment includes a separation membrane unit 10 and a sweep gas feed passage 36. The separation membrane unit 10 includes a separation membrane 11, and is a membrane separation device that separates a gas mixture using the separation membrane 11. The separation membrane 11 can separate the gas mixture into a permeated gas and a non-permeated gas.

The sweep gas feed passage 36 is a passage configured to supply a portion of the above non-permeated gas (specifically, the non-permeated gas discharged from the separation membrane unit 10) to a permeation space of the separation membrane unit 10 as a sweep gas. The sweep gas feed passage 36 is, specifically, connected to a sweep gas inlet (an inlet 14a) of the separation membrane unit 10.

As described above, in the gas separation system 100, a portion of the non-permeated gas is used as a sweep gas through the sweep gas feed passage 36. This configuration allows easy improvement of a recovery rate of a separation target component contained in the gas mixture by recovering a recovery gas containing the permeated gas and the sweep gas without greatly increasing the membrane area of the separation membrane 11. Accordingly, the gas separation system 100 of the present embodiment is suitable for efficiently separating the gas mixture.

In the present embodiment, the gas mixture contains a gas A as the separation target component. Specifically, the gas mixture contains a gas A and a gas B different from the gas A. The gas A is preferably carbon dioxide or hydrogen. In a preferred embodiment, the gas mixture contains carbon dioxide as the gas A and nitrogen as the gas B. In another preferred embodiment, the gas mixture contains hydrogen as the gas A and methane as the gas B.

The separation membrane 11 included in the separation membrane unit 10 is preferentially permeable to the gas A contained in the gas mixture. Therefore, the permeated gas separated by the separation membrane 11 has a higher content of the gas A than the gas mixture and a lower content of the gas B than the gas mixture. In contrast, the non-permeated gas has a lower content of the gas A than the gas mixture and a higher content of the gas B than the gas mixture.

The gas separation system 100 may further include a gas mixture feed passage 30. The gas mixture feed passage 30 is a passage connected to a gas mixture inlet (an inlet 13a) of the separation membrane unit 10 and configured to supply the gas mixture to the separation membrane unit 10 from, for example, a tank (not shown) storing the gas mixture. The gas mixture feed passage 30 may be connected directly to a source of the gas mixture and may be configured to supply the gas mixture continuously to the separation membrane unit 10 from the source. The gas mixture feed passage 30 may be provided with a pressurizing device 40 that increases a pressure of the gas mixture. Examples of the pressurizing device 40 include a compressor, a blower, and a back pressure valve. The pressurizing device 40 can pressurize a feed space of the separation membrane unit 10 by increasing the pressure of the gas mixture.

The gas mixture feed passage 30 may be provided with a heat exchanger (not shown) between the pressurizing device 40 and the separation membrane unit 10. The heat exchanger can cool the gas mixture having a pressure increased by the pressurizing device 40, for example. The heat exchanger is, for example, a gas-liquid heat exchanger that causes heat exchange between a cooling medium, such as an antifreeze, and the gas mixture, and may be, typically, a fin tube heat exchanger.

The gas separation system 100 may further include a discharge passage 32. The discharge passage 32 is a passage connected to a non-permeated gas outlet (an outlet 13b) of the separation membrane unit 10 and configured to discharge the non-permeated gas from the separation membrane unit 10. The discharge passage 32 may be provided with an opening (a discharge outlet 44) for discharging the non-permeated gas from the discharge passage 32. In the gas separation system 100, the non-permeated gas not used as the sweep gas may be discarded through the discharge outlet 44 without being recovered. Alternatively, the discharge passage 32 may be connected to a recovery portion (not illustrated), and the non-permeated gas may be recovered into the recovery portion. Specific examples of the recovery portion include a tank capable of storing the non-permeated gas.

The above sweep gas feed passage 36 preferably branches at a branch point 42 in the discharge passage 32. In this case, at the branch point 42, a portion of the non-permeated gas is delivered to the sweep gas feed passage 36 as the sweep gas. A three-way valve capable of adjusting a flow rate of the non-permeated gas (sweep gas) to be delivered to the sweep gas feed passage 36 may be disposed at the branch point 42. The sweep gas feed passage 36 does not necessarily branch from the discharge passage 32. In one example, when the gas separation system 100 includes a recovery portion for recovering the non-permeated gas, the sweep gas feed passage 36 may be connected to the recovery portion.

The discharge passage 32 may be provided with a depressurizing device and a heat exchanger (not shown). The depressurizing device may be positioned between the separation membrane unit 10 and the branch point 42, or may be positioned between the branch point 42 and the discharge outlet 44. The depressurizing device can depressurize, for example, the non-permeated gas to an atmospheric pressure (e.g., 101 kPa) in an external environment. Examples of the depressurizing device include a depressurizing valve. The heat exchanger is preferably positioned between the depressurizing device and the discharge outlet 44. The heat exchanger can heat the non-permeated gas depressurized by the depressurizing device. The heat exchanger is, for example, a gas-liquid heat exchanger that causes heat exchange between a heat medium, such as hot water, and the non-permeated gas, and may be, typically, a fin tube heat exchanger.

The gas separation system 100 may further include a recovery passage 34 and a recovery portion 20. The recovery passage 34 is a passage connected to a recovery gas outlet (an outlet 14b) of the separation membrane unit 10 and an inlet of the recovery portion 20 and configured to deliver the recovery gas from the separation membrane unit 10 to the recovery portion 20. The recovery portion 20 is configured such that the recovery gas delivered from the separation membrane unit 10 can be recovered into the recovery portion 20 and stored therein. Specific examples of the recovery portion 20 include a tank capable of storing the recovery gas.

Each passage of the gas separation system 100 is formed of, for example, a metal or resin pipe unless otherwise noted.

The gas separation system 100 may further include a controller (not shown) that controls each member of the gas separation system 100. The controller is, for example, a digital signal processor (DSP) including an A/D conversion circuit, an input/output circuit, an arithmetic circuit, a storage device, etc. A program for proper operation of the gas separation system 100 is stored in the controller.

The gas separation system 100 of the present embodiment is a continuous-type system, for example. In the present description, a continuous-type system means a system that can process the gas mixture continuously without closing the passages included in the gas separation system 100 by using, for example, an opening and closing valve. As just described above, the gas separation system 100 of the present embodiment can be operated continuously. The gas separation system 100 that functions as a continuous-type system is suitable for applications where a gas mixture is supplied continuously, for processing of an emission gas, and the like.

[Separation Membrane Unit]

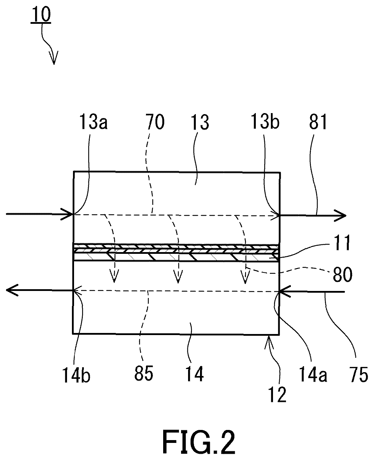

As shown in FIG. 2, the separation membrane unit 10 includes the separation membrane 11 and a tank 12. The tank 12 has a first chamber 13 and a second chamber 14. A space in the first chamber 13 corresponds to the feed space, and a space in the second chamber 14 corresponds to the permeation space. The separation membrane 11 is disposed in the tank 12. In the tank 12, the separation membrane 11 separates the first chamber 13 and the second chamber 14 from each other. The separation membrane 11 extends from one of a pair of wall surfaces of the tank 12 to the other.

The first chamber 13 has the inlet 13a and the outlet 13b, and the second chamber 14 has the inlet 14a and the outlet 14b. The inlet 13a of the first chamber 13 is an opening for supplying a gas mixture 70 to the separation membrane unit 10. The outlet 13b of the first chamber 13 is an opening for discharging, from the separation membrane unit 10, the gas mixture 70 (a non-permeated gas 81) not permeating through the separation membrane 11. The inlet 14a of the second chamber 14 is an opening for supplying a sweep gas 75 to the separation membrane unit 10. The outlet 14b of the second chamber 14 is an opening for discharging a recovery gas 85 containing a permeated gas 80 and the sweep gas 75 from the separation membrane unit 10, the permeated gas 80 being obtained by allowing the gas mixture 70 to permeate through the separation membrane 11. The inlet 13a, the outlet 13b, the inlet 14a, and the outlet 14b are provided, for example, in wall surfaces of the tank 12.

In FIG. 2, a direction from the inlet 13a to the outlet 13b in the first chamber 13 is opposite to a direction from the inlet 14a to the outlet 14b in the second chamber 14. In this case, inside the separation membrane unit 10, the sweep gas 75 (the recovery gas 85) moves in a direction opposite to a direction in which the gas mixture 70 moves. However, the direction from the inlet 13a to the outlet 13b in the first chamber 13 may be the same as the direction from the inlet 14a to the outlet 14b in the second chamber 14, or the sweep gas 75 may move in the same direction as the direction in which the gas mixture 70 moves.

The separation membrane unit 10 is suitable for a flow-type (continuous-type) membrane separation method. However, the separation membrane unit 10 may be used for a batch-type membrane separation method.

(Separation Membrane)

The separation membrane 11 is preferentially permeable to the gas A contained in the gas mixture 70.

Hereinafter, the separation membrane 11 for use when the gas B is carbon dioxide, that is, the separation membrane 11 preferentially permeable to carbon dioxide, will be described. In the present description, a separation membrane preferentially permeable to carbon dioxide may be referred to as a "carbon dioxide permeable membrane".

As shown in FIG. 3A, the separation membrane 11 as a carbon dioxide permeable membrane includes a separation functional layer 1, for example. The separation membrane 11 may further include: a porous support member 3 supporting the separation functional layer 1; and an intermediate layer 2 disposed between the separation functional layer 1 and the porous support member 3. The intermediate layer 2 is in direct contact with each of the separation functional layer 1 and the porous support member 3, for example.

<<Separation Functional Layer>>

The separation functional layer 1 is a layer preferentially permeable to carbon dioxide, and is typically a dense layer (non-porous layer) having no pores observable with a scanning electron microscope (SEM) at 5000-fold magnification.

In a preferred embodiment, the separation functional layer 1 includes a resin. Examples of the resin included in the separation functional layer 1 include a polyether block amide resin, a polyamide resin, a polyether resin, a polyimide resin, a cellulose acetate resin, a silicone resin, and a fluorine resin. The separation functional layer 1 preferably includes a polyether block amide resin. In this embodiment, it is preferable that the separation functional layer 1 substantially consist of a resin. In the present description, the phrase "substantially consisting of" a material means that other components that would alter essential characteristics of the material are excluded, and that the material accounts for, for example, 95 wt% or more, or even 99 wt% or more.

In another preferred embodiment, the separation functional layer 1 includes an ionic liquid. The ionic liquid is a salt (an ionic compound) that is liquid at 25°C. The separation functional layer 1 may include a double-network gel including the ionic liquid. The double-network gel is a gel including two types of network structures independent from each other. The double-network gel includes, for example, a first network structure composed mainly of an organic material, a second network structure composed mainly of an inorganic material, and the ionic liquid. The second network structure may be composed mainly of an organic material different from the organic material of the first network structure. In the present description, the phrase "composed mainly of" a material means that the material constitutes 50 wt% or more or even 70 wt% or more.

The organic material constituting the first network structure includes, for example, a polymer, such as polyacrylamide (particularly, polydialkylacrylamide, such as polydimethylacrylamide). The polymer included in the organic material has a structural unit derived from an acrylamide derivative, and may further include a cross-linked structure. The polymer including a cross-linked structure can be produced by a known method. For example, first, a prepolymer having a structural unit having an N-hydroxysuccinimide ester group is prepared. The structural unit having an N-hydroxysuccinimide ester group derives from N-acryloxysuccinimide, for example. Next, the prepolymer is allowed to react with an amine cross-linking agent to obtain a polymer including a cross-linked structure. The amine cross-linking agent is a compound, such as ethylene glycol bis(3-aminopropyl) ether, having two or more primary amino groups.

The second network structure may include a network of particles. The network of particles are formed of, for example, a plurality of particles bonded to each other by a hydrogen bond. The particles included in the second network structure may be particles mentioned as examples of nanoparticles described later. In one example, the particles included in the second network structure are silica particles.

In the present embodiment, specific examples of the ionic liquid include an ionic liquid having: imidazolium, pyridinium, ammonium, or phosphonium; and a substituent having 1 or more carbon atoms.

In an ionic liquid having imidazolium and a substituent having 1 or more carbon atoms, examples of the substituent having 1 or more carbon atoms include an alkyl group having 1 to 20 carbon atoms, a cycloalkyl group having 3 to 14 carbon atoms, and an aryl group having 6 to 20 carbon atoms. These may be each further substituted by a hydroxy group, a cyano group, an amino group, a monovalent ether group, or the like (such as a hydroxyalkyl group having 1 to 20 carbon atoms).

Examples of the alkyl group having 1 to 20 carbon atoms include a methyl group, an ethyl group, an n-propyl group, an n-butyl group, an n-pentyl group, an n-hexyl group, an n-heptyl group, an n-octyl group, an n-nonyl group, an n-decyl group, an n-undecyl group, an n-dodecyl group, an n-tridecyl group, an n-tetradecyl group, an n-pentadecyl group, an n-hexadecyl group, an n-heptadecyl group, an n-octadecyl group, an n-nonadecyl group, an n-eicosadecyl group, an i-propyl group, a sec-butyl group, an i-butyl group, a 1-methylbutyl group, a 1-ethylpropyl group, a 2-methylbutyl group, an i-pentyl group, a neopentyl group, a 1,2-dimethylpropyl group, a 1,1-dimethylpropyl group, a t-pentyl group, a 2-ethylhexyl group, and a 1,5-dimethylhexyl group. These may be each further substituted by a hydroxy group, a cyano group, an amino group, a monovalent ether group, or the like.

The above alkyl group may be substituted by a cycloalkyl group. The number of carbon atoms in the alkyl group substituted by the cycloalkyl group is, for example, 1 or more and 20 or less. Examples of the alkyl group substituted by the cycloalkyl group include a cyclopropyl methyl group, a cyclobutyl methyl group, a cyclohexyl methyl group, and a cyclohexyl propyl group. These may be each further substituted by a hydroxy group, a cyano group, an amino group, a monovalent ether group, or the like.

Examples of the cycloalkyl group having 3 to 14 carbon atoms include a cyclopropyl group, a cyclobutyl group, a cyclopentyl group, a cyclohexyl group, a cycloheptyl group, a cyclooctyl group, a cyclododecyl group, a norbornyl group, a bornyl group, and an adamantyl group. These may be each further substituted by a hydroxy group, a cyano group, an amino group, a monovalent ether group, or the like.

Examples of the aryl group having 6 to 20 carbon atoms include a phenyl group, a toluyl group, a xylyl group, a mesityl group, an anisyl group, a naphthyl group, and a benzyl group. These may be each further substituted by a hydroxy group, a cyano group, an amino group, a monovalent ether group, or the like.

A compound having imidazolium and the substituent having 1 or more carbon atoms may further have a substituent such as an alkyl group, and may form a salt with a counter anion. Examples of the counter anion include alkyl sulfate, tosylate, methanesulfonate, acetate, bis(fluorosulfonyl)imide, bis(trifluoromethanesulfonyl)imide, thiocyanate, dicyanamide, tricyanomethanide, tetracyanoborate, hexafluorophosphate, tetrafluoroborate, and halide. From the viewpoint of gas separation performance, preferred are bis(fluorosulfonyl)imide, bis(trifluoromethanesulfonyl)imide, dicyanamide, tricyanomethanide, and tetracyanoborate.

Specific examples of the ionic liquid having imidazolium and the substituent having 1 or more carbon atoms include 1-ethyl-3-methylimidazolium bis(fluorosulfonyl)imide, 1-ethyl-3-methylimidazolium dicyanamide, 1-butyl-3-methylimidazolium bromide, 1-butyl-3-methylimidazolium chloride, 1-butyl-3-methylimidazolium tetrafluoroborate, 1-butyl-3-methylimidazolium hexafluorophosphate, 1-butyl-3-methylimidazolium trifluoromethanesulfonate, 1-butyl-3-methylimidazolium tetrachloroferrate, 1-butyl-3-methylimidazolium iodide, 1-butyl-2,3-dimethylimidazolium chloride, 1-butyl-2,3-dimethylimidazolium hexafluorophosphate, 1-butyl-2,3-dimethylimidazolium tetrafluoroborate, 1-butyl-3-methylimidazolium bis(trifluoromethanesulfonyl)imide, 1-butyl-2,3-dimethylimidazolium bis(trifluoromethanesulfonyl)imide, 1-butyl-3-methylimidazolium trifluoro(trifluoromethyl)borate, 1-butyl-3-methylimidazolium tribromide, 1,3-dimesitylimidazolium chloride, 1,3-bis(2,6-diisopropylphenyl)imidazolium chloride, 1,3-diisopropylimidazolium tetrafluoroborate, 1,3-di-tert-butylimidazolium tetrafluoroborate, 1,3-dicyclohexylimidazolium tetrafluoroborate, 1,3-dicyclohexylimidazolium chloride, 1,2-dimethyl-3-propylimidazolium iodide, 1-hexyl-3-methylimidazolium chloride, 1-hexyl-3-methylimidazolium hexafluorophosphate, 1-hexyl-3-methylimidazolium tetrafluoroborate, 1-hexyl-3-methylimidazolium bromide, 1-methyl-3-propylimidazolium iodide, 1-methyl-3-n-octylimidazolium bromide, 1-methyl-3-n-octylimidazolium chloride, 1-methyl-3-n-octylimidazolium hexafluorophosphate, 1-methyl-3-[6-(methylsulfinyl)hexyl]imidazolium p-toluenesulfonate, 1-ethyl-3-methylimidazolium tricyanomethanide, 1-ethyl-3-methylimidazolium tetracyanoborate, and 1-(2-hydroxyethyl)-3-methylimidazolium bis(trifluoromethanesulfonyl)imide.

Among these, from the viewpoint of gas separation performance, particularly preferred are 1-ethyl-3-methylimidazolium bis(fluorosulfonyl)imide ([EMI][FSI]), 1-ethyl-3-methylimidazolium dicyanamide ([EMI][DCA]), 1-ethyl-3-methylimidazolium tricyanomethanide ([EMI][TCM]), 1-ethyl-3-methylimidazolium tetracyanoborate ([EMI][TCB]), 1-butyl-3-methylimidazolium bis(trifluoromethanesulfonyl)imide ([C$_4$mim][TF$_2$N]), and 1-(2-hydroxyethyl)-3-methylimidazolium bis(trifluoromethanesulfonyl)imide ([C$_2$OHim][TF$_2$N]).

The method for producing the double-network gel is not limited to a particular method, and the method disclosed in E. Kamio et al., Adv. Mater, 29, 1704118 (2017) can be used, for example.

A content of the ionic liquid in the double-network gel is, for example, 50 wt% or more, preferably 60 wt% or more, more preferably 70 wt% or more, and still more preferably 80 wt% or more. The higher the content of the ionic liquid is, the more preferentially the separation functional layer 1 is permeable to the carbon dioxide contained in the gas mixture. The upper limit of the content of the ionic liquid is, for example, but not particularly limited to, 95 wt%.

A content of the first network structure, in the double-network gel, composed mainly of an organic material is, for example, 1 wt% or more, preferably 5 wt% or more, and more preferably 10 wt% or more. The upper limit of the content of the first network structure is 15 wt%, for example. A content of the second network structure, in the double-network gel, composed mainly of an inorganic material is, for example, 1 wt% or more from the viewpoint of improving the strength of the double-network gel. The upper limit of the content of the second network structure is 5 wt%, for example. A ratio of a total weight of the first network structure and the second network structure to a weight of the double-network gel is, for example, 2 wt% or more, preferably 5 wt% or more, and more preferably 10 wt% or more. This ratio is preferably 20 wt% or less. In this embodiment, it is preferable that the separation functional layer 1 substantially consist of the double-network gel.

As described above, in the separation membrane 11 as a carbon dioxide permeable membrane, the separation functional layer 1 preferably includes a polyether block amide resin or an ionic liquid.

A thickness of the separation functional layer 1 is, for example, 50 μm or less, preferably 25 μm or less, and more preferably 15 μm or less. In some cases, the thickness of the separation functional layer 1 may be 10 μm or less, 5.0 μm or less, or 2.0 μm or less. The thickness of the separation functional layer 1 may be 0.05 μm or more, or 0.1 μm or more.

<<Intermediate Layer>>

The intermediate layer 2 may include a resin, and may further include nanoparticles dispersed in the resin (matrix). The nanoparticles may be separated from each other or partially aggregate in the matrix. A material of the matrix is not limited to a particular one, and examples thereof include: a silicone resin, such as polydimethylsiloxane; a fluorine resin, such as polytetrafluoroethylene; an epoxy resin, such as polyethylene oxide; a polyimide resin; a polysulfone resin; a polyacetylene resin, such as polytrimethylsilylpropyne or polydiphenylacetylene; and a polyolefin resin, such as polymethylpentene. The matrix preferably includes a silicone resin.

The nanoparticles may include an inorganic material or an organic material. Examples of the inorganic material included in the nanoparticles include silica, titania, and alumina. The nanoparticles preferably include silica.

A thickness of the intermediate layer 2 is not limited to a particular value, and is, for example, less than 50 $\mu$m, preferably 40 $\mu$m or less, and more preferably 30 $\mu$m or less. The lower limit of the thickness of the intermediate layer 2 is not limited to a particular value, and is 1 $\mu$m, for example. The intermediate layer 2 is, for example, a layer having a thickness of less than 50 $\mu$m.

<<Porous Support>>

The porous support member 3 supports the separation functional layer 1 via the intermediate layer 2. Examples of the porous support member 3 include: a nonwoven fabric; porous polytetrafluoroethylene; aromatic polyamide fiber; a porous metal; a sintered metal; porous ceramic; porous polyester; porous nylon; activated carbon fiber; latex; silicone; silicone rubber; a permeable (porous) polymer including at least one selected from the group consisting of polyvinyl fluoride, polyvinylidene fluoride, polyurethane, polypropylene, polyethylene, polystyrene, polycarbonate, polysulfone, polyether ether ketone, polyacrylonitrile, polyimide, and polyphenylene oxide; a metallic foam having an open cell or a closed cell; a polymer foam having an open cell or a closed cell; silica; a porous glass; and a mesh screen. The porous support member 3 may be a combination of two or more of these materials.

The porous support member 3 has an average pore diameter of 0.01 to 0.4 $\mu$m, for example. A thickness of the porous support member 3 is not limited to a particular value, and is, for example, 10 $\mu$m or more, preferably 20 $\mu$m or more, and more preferably 50 $\mu$m or more. The thickness of the porous support member 3 is, for example, 300 $\mu$m or less, preferably 200 $\mu$m or less, and more preferably 150 $\mu$m or less.

<<Separation Membrane Manufacturing Method>>

The separation membrane 11 can be produced by the following method. First, a coating liquid containing the material(s) of the intermediate layer 2 is prepared. Next, the coating liquid containing the material(s) of the intermediate layer 2 is applied to the porous support member 3 to form a coating. The method for applying the coating liquid is not limited to a particular one, and a wire bar, etc. can be used, for example. The thickness of the intermediate layer 2 to be formed can be adjusted by adjusting a wire diameter of the wire bar and the concentration of the material of the intermediate layer 2 in the coating liquid. The coating may be formed by immersing the porous support member 3 in the coating liquid. Next, the coating is dried to form the intermediate layer 2. The coating can be dried under heating conditions, for example. The heating temperature for the coating is 50°C or higher, for example. The heating time of the coating is, for example, 1 minute or more, and may be 5 minutes or more.

An easy-adhesion treatment can be applied to a surface of the intermediate layer 2 as necessary. As the easy-adhesion treatment, a surface treatment, such as application of an undercoat agent, a corona discharge treatment, and a plasma treatment, may be applied.

Next, a coating liquid containing the material(s) of the separation functional layer 1 is prepared. The coating liquid containing the material(s) of the separation functional layer 1 is applied to the intermediate layer 2 to form a coating. The coating is dried to form the separation functional layer 1. The method for applying the coating liquid and the drying conditions can be the same as the method and the conditions described above for the intermediate layer 2. The application of the coating liquid containing the material(s) of the separation functional layer 1 may be performed by spin coating. Thus, the separation membrane 11 can be obtained.

The method for producing the separation membrane 11 is not limited to the above method, and the separation membrane 11 can also be produced by the following method. First, the coating liquid containing the material(s) of the separation functional layer 1 is applied on a transfer film to form a coating. The coating is dried to form the separation functional layer 1. Next, the coating liquid containing the material(s) of the intermediate layer 2 is applied on the separation functional layer 1 and dried to form the intermediate layer 2. A laminate of the intermediate layer 2 and the separation functional layer 1 is transferred to the porous support member 3. Thus, the separation membrane 11 can be obtained.

<<Properties of Separation Membrane>>

A permeance of carbon dioxide permeating through the separation membrane 11 is not limited to a particular value. In one example, a permeance $T_{CO2}$ of carbon dioxide permeating through the separation membrane 11 is, for example, 5 GPU or more, and may be 10 GPU or more, 50 GPU or more, 100 GPU or more, 300 GPU or more, or even 500 GPU or more. The upper limit of the permeance $T_{CO2}$ is, for example, but not particularly limited to, 1000 GPU. GPU refers to $10^{-6} \cdot cm^3(STP)/(sec \cdot cm^2 \cdot cmHg)$. The symbol "$cm^3(STP)$" means the volume of a gas at 1 atmospheric pressure and 0°C.

The permeance $T_{CO2}$ can be calculated by the following method. First, the gas mixture composed of carbon dioxide and nitrogen is supplied to a space adjacent to one surface of the separation membrane 11 (e.g., a principal surface 11a of the separation membrane 11 on the separation functional layer side) while a space adjacent to the other surface (e.g., a principal surface 11b of the separation membrane 11 on the porous support side) of the separation membrane 11 is depressurized. As a result, the permeated gas having permeated through the separation membrane 11 is obtained in the space adjacent to the other surface of the separation membrane 11. The composition of the permeated gas and the weight of the permeated gas, for example, are measured. The permeance $T_{CO2}$ can be calculated from the measurement results. In the above operation, the carbon dioxide concentration in the gas mixture is 50 vol% under the standard conditions (0°C, 101 kPa). The gas mixture supplied to the space adjacent to the one surface of the separation membrane 11 has a temperature of 30°C and a pressure of 0.1 MPa. The space adjacent to the other surface of the separation membrane 11 is depressurized so that the pressure in the space is 0.1 MPa lower than the atmospheric pressure in the measurement environment.

Under the measurement conditions for the above permeance $T_{CO2}$, a separation factor $\alpha_{CO2}$ of the separation membrane 11 for carbon dioxide with respect to nitrogen is, for example, 20 or more, 30 or more, 40 or more, or even 50 or more. The upper limit of the separation factor $\alpha_{CO2}$ is, for example, but not particularly limited to, 100. The separation factor $\alpha_{CO2}$ can be calculated by the following formula. In the following formula, $X_A$ and $X_B$ are respectively a volume fraction of carbon dioxide and that of nitrogen in the gas mixture. $Y_A$ and $Y_B$ are respectively a volume fraction of carbon dioxide and that of nitrogen in the permeated gas having permeated through the separation membrane 11.

$$\text{Separation factor } \alpha_{CO2} = (Y_A/Y_B)/(X_A/X_B)$$

(Modification of Separation Membrane)

The separation membrane 11 is not limited to the above carbon dioxide permeable membrane. Hereinafter, the separation membrane 11 for use when the gas A is hydrogen, that is, the separation membrane 11 preferentially permeable to hydrogen, will be described. In the present description, a separation membrane preferentially permeable to hydrogen may be referred to as a "hydrogen permeable membrane".

As shown in FIG. 3B, the separation membrane 11 as a hydrogen permeable membrane includes, for example, a separation functional layer 5. Examples of the separation functional layer 5 include a resin layer including a resin and a metal layer including a metal. The separation membrane 11 may further include a support member 7 supporting the separation functional layer 5 and a coat layer 6 coating the separation functional layer 5. For example, the separation functional layer 5 is disposed between the coat layer 6 and the support member 7, and is in direct contact with each of the coat layer 6 and the support member 7. Note that an adhesive may be disposed between the separation functional layer 5 and the support member 7. Another support member may further be disposed between the separation functional layer 5 and the coat layer 6.

<<Separation Functional Layer>>

The separation functional layer 5 is a layer preferentially permeable to hydrogen. When the separation functional layer 5 is a resin layer, examples of the resin included in the resin layer include a polyamide resin and a polyimide resin. It is preferable that the resin layer substantially consist of the resin.

When the separation functional layer 5 is a metal layer, the metal included in the metal layer is not limited to a particular one as long as the metal itself or an alloy of the metal has a function of allowing hydrogen to permeate therethrough. Examples of the metal include Pd, Nb, V, Ta, Ni, Fe, Al, Cu, Ru, Re, Rh, Au, Pt, Ag, Cr, Co, Sn, Zr, Y, Ce, Ti, Ir, Mo, and an alloy including two or more of these metals.

The metal layer is preferably an alloy layer including a Pd alloy. Another metal forming the Pd alloy is not limited to a particular one, and is preferably a group 11 element, and more preferably at least one selected from the group consisting of Au, Ag, and Cu. The metal layer preferably includes a Pd-Au alloy. A content of group 11 element(s) in the Pd alloy is preferably 20 to 65 mol%, more preferably 30 to 65 mol%, still more preferably 30 to 60 mol%, and particularly preferably 40 to 60 mol%. An alloy layer including a Pd-Ag alloy having an Ag content of 20 mol% or more, a Pd-Cu alloy having a Cu content of 30 mol% or more, or a Pd-Au alloy having an Au content of 20 mol% or more is less likely to be embrittled by hydrogen even in a low temperature range of approximately 60°C or lower. The Pd alloy may include a group IB metal and/or a group IIIA metal.

The Pd alloy may be an alloy composed of three or more components instead of the above-mentioned two-component alloy. Examples of the alloy composed of three or more components include Pd-Au-Ag, Pd-Au-Cu, and Pd-Au-Ag-Cu. For example, in the case of a multicomponent alloy including Pd, Au, and additional metal(s), the sum of an Au content and an additional metal(s) content in the alloy is preferably 55 mol% or less, more preferably 50 mol% or less, still more preferably 45 mol% or less, and particularly preferably 40 mol% or less.

It is preferable that the metal layer substantially consist of a metal. The metal layer can be produced by a method, such as a rolling method, a sputtering method, a vacuum deposition method, an ion plating method, or a plating method. The rolling method is suitable for producing a relatively thick metal layer. The sputtering method is suitable for producing a relatively thin metal layer.

The rolling method may be hot rolling or cold rolling. The rolling method is a method in which a metal is stretched into a membranous shape by applying a pressure to the metal using one or more pairs of rolls. A thickness of the metal layer obtained by the rolling method is preferably 5 to 50 $\mu$m, and more preferably 10 to 30 $\mu$m. When the thickness of the metal layer is 5 $\mu$m or more, it is possible to suppress occurrence of pinholes or cracks during the production, and also to suppress deformation when hydrogen is occluded. When the thickness of the metal layer is 50 $\mu$m or less, it is possible to ensure a sufficient hydrogen permeability of the metal layer while suppressing the production cost of the metal layer.

The sputtering method can be performed in the following manner using a sputtering apparatus of, for example, parallel plate type, single wafer type, pass-through type, DC sputtering, or RF sputtering. First, a substrate is set in a sputtering apparatus in which a metal target is placed. Next, the inside of the sputtering apparatus is evacuated and an Ar gas pressure is adjusted to a specified value. A predetermined sputtering current is applied to the metal target to form a metal film on the substrate. The metal film is peeled off from the substrate to obtain the metal layer. As the metal target, one target or two or more targets can be used depending on the composition of the metal layer to be formed. Examples of the substrate used in the sputtering method include a glass plate, a ceramic plate, a silicon wafer, and a metal plate including aluminum, stainless steel, or the like. According to the sputtering method, it is also possible to form the metal layer directly on the support member 7.

A thickness of the metal layer obtained by the sputtering method is preferably 0.01 to 5 $\mu$m, and more preferably 0.05 to 2 $\mu$m. When the thickness of the metal layer is 0.01 $\mu$m or more, it is possible to suppress occurrence of pinholes during the production and to obtain sufficient mechanical strength. Moreover, the metal layer having a thickness of 0.01 $\mu$m or more is less likely to be damaged when being peeled off from the substrate, and it tends to be easy to handle after peeling. The metal layer having a thickness of 5 $\mu$m or less can be produced in a short time, and its production cost can be reduced.

<<Coat Layer>>

A material of the coat layer 6 is not limited to a particular one, and examples thereof include a fluorine-based compound, a rubber-based polymer, a silicone-based polymer, a urethane-based polymer, and a polyester-based polymer. Preferred is at least one selected from the group consisting of a fluorine-based compound, a rubber-based polymer, and a silicone-based polymer.

Examples of the fluorine-based compound include: a fluoroalkyl group-containing compound, such as a fluoroalkyl carboxylate, a fluoroalkyl quaternary ammonium salt, or a fluoroalkyl ethylene oxide adduct; a perfluoroalkyl group-containing compound, such as a perfluoroalkyl carboxylate, a perfluoroalkyl quaternary ammonium salt, or a perfluoroalkyl ethylene oxide adduct; a fluorine-based polymer, such as a tetrafluoroethylene/hexafluoropropylene copolymer, a tetrafluoroethylene/perfluoroalkyl vinyl ether copolymer, a tetrafluoroethylene polymer, a vinylidene fluoride/tetrafluoroethylene copolymer, a vinylidene fluoride/hexafluoropropylene copolymer, a fluorine-containing (meth)acrylic ester polymer, a fluorine-containing (meth)acrylic acid alkyl ester polymer, or a copolymer of a fluorine-containing (meth)acrylic ester and another monomer; and a fluorine-containing (meth)acrylic ester. As the fluorine-based compound, "DURASURF" series available from Harves Co., Ltd., "OPTOOL" series available from DAIKIN INDUSTRIES, LTD., "KY-100" series available from Shin-Etsu Chemical Co., Ltd., or the like may be used.

Examples of the rubber-based polymer include natural rubber, styrene-butadiene rubber, acrylonitrile-butadiene rubber, polychloroprene rubber, polyisoprene rubber, polybutadiene rubber, ethylene propylene rubber, ethylene-propylene-diene terpolymer rubber, chlorosulphonated polyethylene rubber, and ethylene-vinyl acetate copolymer rubber. As the rubber-based polymer, for example, "ELEP COAT" series available from Nitto Shinko Corporation may be used.

Examples of the silicone-based polymer include polydimethylsiloxane, alkyl-modified polydimethylsiloxane, carboxyl-modified polydimethylsiloxane, amino-modified polydimethylsiloxane, epoxy-modified polydimethylsiloxane, fluorine-modified polydimethylsiloxane, and (meth)acrylate-modified polydimethylsiloxane.

The coat layer 6 can be formed by, for example, applying a composition including the material of the coat layer 6 to the separation functional layer 5 and curing the composition. The method for applying the composition is not limited to a particular method, and examples thereof include a roll coating method, a spin coating method, a dip coating method, a spray coating method, a bar coating method, a knife coating method, a die coating method, an ink jet method, and a gravure coating method.

A solvent included in the composition can be suitably selected depending on the starting material of the coat layer 6. When the fluorine-based compound is used as the material of the coat layer 6, one solvent or a combination of two or more solvents selected from, for example, a fluorine-based solvent, an alcohol-based solvent, an ether-based solvent, an ester-based solvent, and a hydrocarbon-based solvent can be used as the solvent. Among these solvents, a fluorine-based solvent that is non-flammable and evaporates quickly is preferably used alone or in combination with another solvent.

Examples of the fluorine-based solvent include hydrofluoroether, perfluoropolyether, perfluoroalkane, hydrofluoropolyether, hydrofluorocarbon, perfluorocycloether, perfluorocycloalkane, hydrofluorocycloalkane, xylenehexafluoride, hydrofluorochlorocarbon, and perfluorocarbon.

A thickness of the coat layer 6 is not limited to a particular value, and is preferably 0.1 $\mu$m or more, more preferably 0.3 $\mu$m or more, still more preferably 0.5 $\mu$m or more, and particularly preferably 1.0 $\mu$m or more. The thickness of the coat layer 6 is, for example, 80 $\mu$m or less, preferably 50 $\mu$m or less, more preferably 30 $\mu$m or less, still more preferably 20 $\mu$m or less, particularly preferably 10 $\mu$m or less, and especially preferably 5 $\mu$m or less. The thickness of the coat layer 6 can be adjusted by a solid content concentration in the composition including the material of the coat layer 6 and the number of applications of the composition. The coat layer 6 is preferably nonporous.

<<Support Member>>

The support member 7 is not limited to a particular one as long as it is permeable to hydrogen and supports the separation functional layer 5. The support member 7 is a porous body, for example. The support member 7 may be nonporous. The support member 7 may be formed of a woven fabric, a nonwoven fabric, or the like. Examples of a material of the support member 7 include: a polyolefin, such as polyethylene or polypropylene; a polyester, such as polyethylene terephthalate or polyethylene naphthalate; a polyarylethersulfone, such as polysulfone or polyethersulfone; a fluororesin, such as polytetrafluoroethylene or polyvinylidene fluoride; an epoxy resin; a polyamide; and a polyimide. Preferred is polysulfone or polytetrafluoroethylene, each being chemically and thermally stable.

The support member 7 is preferably a porous body having an average pore diameter of 100 $\mu$m or less. Since this porous body has sufficient surface smoothness, the metal layer with a uniform thickness can be easily formed directly on the porous body by the sputtering method or the like. Here, it is also possible to suppress occurrence of pinholes or cracks in the metal layer. A thickness of the support member 7 is, for example, but not particularly limited to, 5 to 1000 $\mu$m, and is preferably 10 to 300 $\mu$m.

<<Properties of Separation Membrane>>

A permeance of hydrogen permeating through the separation membrane 11 is not particularly limited. In one example, a permeance $T_{H2}$ of hydrogen permeating through the separation membrane 11 is, for example, 5 GPU or more, and may be 10 GPU or more, 50 GPU or more, 100 GPU or more, 300 GPU or more, or even 500 GPU or more. The upper limit of the permeance $T_{H2}$ is, for example, but not particularly limited to, 1000 GPU.

The permeance $T_{H2}$ can be calculated by the following method. First, the gas mixture composed of hydrogen and methane is supplied to a space adjacent to one surface (e.g., the principal surface 11a of the separation membrane 11 on the coat layer side) of the separation membrane 11 while a space adjacent to the other surface (e.g., the principal surface 11b of the separation membrane 11 on the support member side) of the separation membrane 11 is depressurized. As a result, the permeated gas having permeated through the separation membrane 11 is obtained in the space adjacent to the other surface of the separation membrane 11. The composition of the permeated gas and the weight of the permeated gas, for example, are measured. The permeance $T_{H2}$ can be calculated from the measurement results. In the above operation, the hydrogen concentration in the gas mixture is 50 vol% under the standard conditions (0°C, 101 kPa). The gas mixture supplied to the space adjacent to the one surface of the separation membrane 11 has a temperature of 30°C and a pressure of 0.1 MPa. The space adjacent to the other surface of the separation membrane 11 is depressurized so that the pressure in the space is 0.1 MPa lower than the atmospheric pressure in the measurement environment.

Under the measurement conditions for the above permeance $T_{H2}$, a separation factor $\alpha_{H2}$ of the separation membrane 11 for hydrogen with respect to methane is, for example, 50 or more, 100 or more, 200 or more, or even 400 or more. The upper limit of the separation factor $\alpha_{H2}$ is, for example, but not particularly limited to, 1000. The separation factor $\alpha_{H2}$ can be calculated by the following formula. In the following formula, $X_A$ and $X_B$ are respectively a volume fraction of hydrogen and that of methane in the gas mixture. $Y_A$ and $Y_B$ are respectively a volume fraction of hydrogen and that of methane in the permeated gas having permeated through the separation membrane 11.

$$\text{Separation factor } \alpha_{H2} = (Y_A/Y_B)/(X_A/X_B)$$

[Gas Mixture Separation Method]

In the present embodiment, a method for separating the gas mixture 70 includes: supplying the gas mixture 70 to the separation membrane unit 10 to separate the gas mixture 70 into the permeated gas 80 and the non-permeated gas 81 (separation step); supplying a portion of the non-permeated gas 81 to the permeation space of the separation membrane unit 10 as the sweep gas 75 (sweep gas supply step); and recovering the recovery gas 85 containing the permeated gas 80 and the sweep gas 75 (recovery step).

The separation step can be performed in the following manner. First, the gas mixture 70 is supplied to the first chamber 13 (feed space) of the separation membrane unit 10 through the gas mixture feed passage 30. Preferably, the pressure of the gas mixture 70 is increased by the pressurizing device 40 before the gas mixture 70 is supplied to the first chamber 13. The pressure of the gas mixture 70 increased by the pressurizing device 40, i.e., a pressure in the feed space of the first separation membrane unit 10, is, for example, 0.1 MPa or more, and may be 0.5 MPa or more, or even 0.8 MPa or more. The upper limit of the pressure of the gas mixture 70 is, for example, but not particularly limited to, 10.0 MPa or less. In the present description, the term "pressure" refers to the absolute pressure, unless otherwise described.

As described above, the gas mixture 70 contains the gas A as a separation target component. The gas A is preferably carbon dioxide or hydrogen. The gas mixture 70 may be, for example, a gas emitted from thermal power generation or an emission gas from a chemical plant (e.g., an emission gas generated by a shift reaction). Note that the gas A is not limited to carbon dioxide and hydrogen. The gas A may be an acid gas other than carbon dioxide, may be a non-polar gas, such as oxygen, or may be an inert gas, such as helium. Examples of the acid gas other than carbon dioxide include hydrogen sulfide, carbonyl sulfide, a sulfur oxide ($SO_x$), hydrogen cyanide, and a nitrogen oxide ($NO_x$).

The gas mixture 70 further contains the gas B different from the gas A. The gas B is preferably nitrogen or methane. In some cases, the gas B may be any of those described above for the gas A. As described above, in a preferred embodiment, the gas mixture 70 contains carbon dioxide as the gas A, and nitrogen as the gas B. In another preferred embodiment, the gas mixture 70 contains hydrogen as the gas A and methane as the gas B. The gas mixture 70 may contain water vapor as the gas A or the gas B, or does not necessarily contain water vapor.

A content of the gas A in the gas mixture 70 is, for example, 50 vol% or less, and may be 30 vol% or less, 20 vol% or less, 10 vol% or less, or even 5 vol% or less. The lower limit of the content of the gas A in the gas mixture 70 is, for example, but not particularly limited to, 1 vol% or more. A content of the gas B in the gas mixture 70 is, for example, but not particularly limited to, 50 vol% to 99 vol%. In the present description, the terms "content" and "volume" each refer to a value obtained under the standard conditions (0°C, 101 kPa) unless otherwise specified.

The gas mixture 70 supplied to the first chamber 13 of the separation membrane unit 10 is separated by the separation membrane 11. Thereby, the permeated gas 80 is supplied to the second chamber 14. As described above, the separation membrane 11 of the separation membrane unit 10 is preferentially permeable to the gas A contained in the gas mixture 70. Therefore, the permeated gas 80 has a higher content of the gas A than the gas mixture 70. The permeated gas 80 supplied to the second chamber 14 is mixed with the sweep gas 75 supplied in the sweep gas supply step described later. The recovery gas 85 containing the permeated gas 80 and the sweep gas 75 is discharged out of the separation membrane unit 10 through the outlet 14b.

The concentration of the gas A in the gas mixture 70 gradually decreases from the inlet 13a toward the outlet 13b in the first chamber 13. The content of the gas A in the gas mixture 70 (the non-permeated gas 81) processed in the first chamber 13 is, for example, but not particularly limited to, 10 vol% or less, and may be 5 vol% or less, 3 vol% or less, or even 1 vol% or less. The non-permeated gas 81 is discharged out of the separation membrane unit 10 through the outlet 13b and delivered to the discharge passage 32.

In the sweep gas supply step, for example, at the branch point 42 in the discharge passage 32, a portion of the non-permeated gas 81 is delivered to the sweep gas feed passage 36 as the sweep gas 75. The sweep gas 75 is supplied to the second chamber 14 (permeation space) of the separation membrane unit 10 through the sweep gas feed passage 36. As described above, the sweep gas 75 supplied to the second chamber 14 is mixed with the permeated gas 80 to give the recovery gas 85.

In the present embodiment, a pressure of the recovery gas 85 is preferably adjusted to approximately an atmospheric pressure of an ambient environment of the gas separation system 100, but is not limited to a particular pressure. The pressure of the recovery gas 85 may be lower than the atmospheric pressure, or may be higher than the atmospheric pressure.

A content of the gas A in the recovery gas 85 is higher than the content of the gas A in the gas mixture 70. The content of the gas A in the recovery gas 85 is, for example, 5 vol% or more, and may be 10 vol% or more, 20 vol% or more, 30 vol% or more, 40 vol% or more, 50 vol% or more, or even 60 vol% or more. The upper limit of the content of the gas A in the recovery gas 85 is, for example, but not particularly limited to, 90 vol% or less, or may be 80 vol% or less. The upper limit of the content of the gas A in the recovery gas 85 may be, in some cases, 60 vol% or less, or 50 vol% or less. A ratio of the content (vol%) of the gas A in the recovery gas 85 to the content (vol%) of the gas A in the gas mixture 70 is, for example, but not particularly limited to, 1.2 to 9, and may be 1.2 to 5, or 1.2 to 3.

A content of water vapor in the recovery gas 85 may be low. The content of water vapor in the recovery gas 85 is, for example, 10 vol% or less, and may be 5 vol% or less, 1 vol% or less, 0.5 vol% or less, or even 0.1 vol% or less. The recovery gas 85 may be substantially free of water vapor.

In the recovery step, the recovery gas 85 is recovered into the recovery portion 20. A recovery rate of the gas A by the recovery gas 85 is, for example, 30% or more, and may be 50% or more, 70% or more, 80% or more, 90% or more, 95% or more, or even 99% or more. In the present description, the term "recovery rate" means a ratio of a weight of the gas A contained in the recovery gas 85 to a weight of the gas A contained in the gas mixture 70.

In the case of the separation method according to the present embodiment, adjusting a flow rate of the sweep gas 75 to a large value makes it easier to adjust the recovery rate of the gas A by the recovery gas 85 to a large value. In one example, a proportion F1/F2 of a flow rate F1 ($m^3$/h) of the sweep gas 75 to a flow rate F2 ($m^3$/h) of the gas mixture 70 supplied to the separation membrane unit 10 is, for example, 6.0% or more, and may be 8.0% or more, 10% or more, 15% or more, 20% or more, 25% or more, or even 30% or more. In terms of adjusting the content of the gas A in the recovery gas 85 to a large value, the upper limit of the proportion F1/F2 is, for example, 50% or less, and may be 35% or less. In the present description, the term "flow rate" refers to a value obtained under the standard conditions (0°C, 101 kPa) unless otherwise specified.

Furthermore, a proportion F1/F3 of the flow rate F1 ($m^3$/h) of the sweep gas 75 to a flow rate F3 ($m^3$/h) of the recovery gas 85 is, for example, 19% or more, and may be 25% or more, 30% or more, 40% or more, 50% or more, or even 60% or more. The upper limit of the proportion F1/F3 is, for example, 80% or less, and may be 70% or less.

In the case of the gas separation system 100, a proportion F1/F4 of the flow rate F1 ($m^3$/h) of the sweep gas 75 to the flow rate F4 ($m^3$/h) of the non-permeated gas 81 discharged through the discharge outlet 44 of the discharge passage 32 (the non-permeated gas 81 excluding the sweep gas 75) is, for example, 6.0% or more, and may be 10% or more, 20% or more, 30% or more, 40% or more, 50% or more, 60% or more, 70% or more, 80% or more, or even 90% or more. The upper limit of the proportion F1/F4 is, for example, 120% or less, and may be 100% or less.

A proportion F3/F2 of the flow rate F3 ($m^3$/h) of the recovery gas 85 to the flow rate F2 ($m^3$/h) of the gas mixture 70 supplied to the separation membrane unit 10 is, for example, but not particularly limited to, 10% to 70%, and may be 15% to 70%.

FIG. 5 is a schematic configuration diagram showing an example of a conventional gas separation system 200. The conventional gas separation system 200 has the same configuration as that of the gas separation system 100 of FIG. 1 except that a non-permeated gas is not used as a sweep gas. Specifically, the gas separation system 200 includes a separation membrane unit 210 including a separation membrane 211, a recovery portion 220, a gas mixture feed passage 230, a discharge passage 232, a recovery passage 234, and a sweep gas feed passage 236. The gas mixture feed passage 230 is provided with a pressurizing device 240 that increases the pressure of a gas mixture. The sweep gas feed passage 236 is configured to be capable of supplying the sweep gas from, for example, a tank (not shown) storing the sweep gas to the separation membrane unit 210. The sweep gas feed passage 236 is provided with a pressurizing device 246 that increases the pressure of the sweep gas. In the gas separation system 200, a gas (e.g., air) containing almost no gas A which is a separation target component is used as the sweep gas.

In the case of the conventional gas separation system 200, the non-permeated gas discharged from the separation membrane unit 210 is discarded through a discharge outlet 244 of the discharge passage 232. Therefore, in the case of the gas separation system 200, to improve the recovery rate of the gas A by the recovery gas, it is necessary to increase the membrane area of the separation membrane 211 and thereby increase the amount of the gas A permeating through the separation membrane 211.

Contrarily, in the case of the gas separation system 100 according to the present embodiment, a portion of the non-permeated gas 81 is used as the sweep gas 75. In the case of this configuration, a portion of the gas A contained in the non-permeated gas 81 is not discarded and is mixed with the permeated gas 80. This makes it possible to easily improve the recovery rate of the gas A (separation target component) contained in the gas mixture 70 without greatly increasing the membrane area of the separation membrane 11. It can be said that the gas separation system 100 according to the present embodiment is more suitable for efficiently separating the gas mixture 70 than the conventional gas separation system 200.

Moreover, in the conventional gas separation system 200, it is commonly necessary to increase the pressure of the sweep gas using the pressurizing device 246 to deliver the sweep gas to the separation membrane unit 210. Contrarily, in the gas separation system 100 according to the present embodiment, the pressure of the gas mixture 70 is increased by the pressurizing device 40, so that the sweep gas 75 has a pressure that is high enough for practical use. That is, in the gas separation system 100, the pressure of the sweep gas 75 does not need to be increased separately. Hence, in the gas separation system 100 according to the present embodiment, it is easier to adjust the power (recovery power) for recovering the gas A to a small value than in the conventional gas separation system 200.

[Modification of Separation Membrane Unit]

In the gas separation system 100, the separation membrane unit 10 may be a spiral membrane element, a hollow fiber membrane element, or the like. FIG. 4 shows a spiral membrane element. A separation membrane unit 15 shown in FIG. 4 includes a central tube 16 and a laminate 17. The laminate 17 includes the separation membrane 11.

The central tube 16 has a cylindrical shape. The central tube 16 has a surface with a plurality of holes to allow the permeated gas 80 to flow into the central tube 16. Examples of a material of the central tube 16 include: resins, such as an acrylonitrile-butadiene-styrene copolymer resin (an ABS resin), a polyphenylene ether resin (a PPE resin), or a polysulfone resin (a PSF resin); and metals, such as stainless steel or titanium. The central tube 16 has an inner diameter in a range of, for example, 20 to 100 mm.

The laminate 17 further includes a feed-side flow passage material 18 and a permeation-side flow passage material 19 in addition to the separation membrane 11. The laminate 17 is wound around the central tube 16. The separation membrane unit 15 may further include an exterior material (not shown).

As the feed-side flow passage material 18 and the permeation-side flow passage material 19, a resin net, woven fabric, or knitted fabric formed of polyethylene, polypropylene, polyethylene terephthalate (PET), polyphenylene sulfide (PPS), or an ethylene-chlorotrifluoroethylene copolymer (ECTFE) can be used, for example.

Membrane separation using the separation membrane unit 15 is performed in the following manner, for example. First, the gas mixture 70 is supplied to one end of the wound laminate 17, and the sweep gas 75 is supplied into the central tube 16. The sweep gas 75 moves from the inside of the central tube 16 to a space (permeation space) containing the permeation-side flow passage material 19. The permeated gas 80 having permeated through the separation membrane 11 of the laminate 17 is mixed with the sweep gas 75 in the permeation space. The recovery gas 85 containing the permeated gas 80 and the sweep gas 75 moves into the central tube 16, and is discharged outside through the central tube 16. The gas mixture 70 (the non-permeated gas 81) processed in the separation membrane unit 15 is discharged outside from the other end of the wound laminate 17.

EXAMPLES

Hereinafter, the present invention will be described in more detail by way of examples, but the present invention is not limited to these examples.

(Calculation Example A1)

Operation of the gas separation system 100 as shown in FIG. 1 was simulated using Symmetry, a process modeling software available from Schlumberger Ltd. It was assumed that a carbon dioxide permeable membrane was used as the separation membrane included in the separation membrane unit. For this separation membrane, the permeance $T_{CO_2}$ of carbon dioxide was set to 500 GPU, and the separation factor $\alpha_{CO_2}$ for carbon dioxide with respect to nitrogen was set to 30. Moreover, in this simulation, it was assumed that a portion of the non-permeated gas was used as the sweep gas and the recovery gas composed of the permeated gas and the sweep gas was recovered. Furthermore, gas mixture supply conditions and conditions for carbon dioxide recovery using the recovery gas were set as follows. Note that it was assumed that the pressure of the gas mixture was increased from an atmospheric pressure (101.33 kPa) of an external environment to a gauge pressure of 0.8 MPa using the pressurizing device provided to the gas mixture feed passage.

[Gas Mixture Supply Conditions]

Flow rate: 10176 $Nm^3/h$
Composition (volume ratio): $CO_2/N_2$ = 5/95
Weight of $CO_2$: 1000 kg/hr
Pressure: gauge pressure, 0.8 MPa (absolute pressure, 0.9 MPa)
Temperature: 30°C
[Conditions for Carbon Dioxide Recovery Using Recovery Gas]
$CO_2$ content in recovery gas: 10 vol%
Recovery rate (a proportion of the weight of $CO_2$ in the recovery gas to the weight of $CO_2$ in the gas mixture): 99.1%

Pressure of recovery gas: gauge pressure, 0 MPa (absolute pressure, 0.1 MPa)

After the simulation in Calculation Example A1, the membrane area of the separation membrane required to separate the gas mixture using the gas separation system and a carbon dioxide recovery power (a ratio of energy (kWh) required to operate the gas separation system to the weight (kg) of the recovered carbon dioxide) were calculated.

(Calculation Example B1)

Calculation Example B1 was simulated in the same manner as in Calculation Example A1, except that operation of the gas separation system 200 as shown in FIG. 5, instead of the gas separation system 100, was assumed. In this simulation, it was assumed that air was used as the sweep gas and the recovery gas composed of the permeated gas and the sweep gas was recovered. Note that it was assumed that with the use of the pressurizing device provided to the sweep gas feed passage, the pressure of the sweep gas was increased to a level suitable for supplying the gas to the separation membrane unit. The air was assumed to be a gas mixture of nitrogen and oxygen ($N_2/O_2$ = 80/20 (volume ratio)).

(Calculation Examples A2 to A5)

Calculation Examples A2 to A5 were simulated in the same manner as in Calculation Example A1, except that the gas mixture supply conditions and the conditions for carbon dioxide recovery using the recovery gas were changed as shown in Tables 1 and 2.

(Calculation Examples B2 to B5)

Calculation Examples B2 to B5 were simulated in the same manner as in Calculation Example B1, except that the gas mixture supply conditions and the conditions for carbon dioxide recovery using the recovery gas were changed as shown in Tables 1 and 2.

[Table 1]

| | Gas separation system | Sweep gas | | | Gas mixture | | Recovery gas | | Non-permeated gas (*1) | |
|---|---|---|---|---|---|---|---|---|---|---|
| | | Type | $CO_2$ content (vol%) | Flow rate F1 ($Nm^3/h$) | $CO_2$ content (vol%) | Flow rate F2 ($Nm^3/h$) | $CO_2$ content (vol%) | Flow rate F3 ($Nm^3/h$) | $CO_2$ content (vol%) | Flow rate F4 ($Nm^3/h$) |
| Calc. Ex. A1 | FIG. 1 | Non-permeated gas | 0.09 | 3379 | 5 | 10176 | 10 | 5041 | 0.09 | 5135 |
| Calc. Ex. B1 | FIG. 5 | Air | 0 | 3255 | 5 | 10176 | 10 | 5041 | 0.05 | 8390 |
| Calc. Ex. A2 | FIG. 1 | Non-permeated gas | 1.52 | 1173 | 5 | 10176 | 20 | 1913 | 1.52 | 8263 |
| Calc. Ex. B2 | FIG. 5 | Air | 0 | 1015 | 5 | 10176 | 20 | 1913 | 1.33 | 9397 |
| Calc. Ex. A3 | FIG. 1 | Non-permeated gas | 0.06 | 840 | 20 | 2542 | 30 | 1692 | 0.06 | 850 |
| Calc. Ex. B3 | FIG. 5 | Air | 0 | 810 | 20 | 2542 | 30 | 1692 | 0.03 | 1653 |
| Calc. Ex. A4 | FIG. 1 | Non-permeated gas | 0.62 | 532 | 20 | 2542 | 40 | 1250 | 0.62 | 1292 |

(continued)

| | Gas separation system | Sweep gas | | | Gas mixture | | Recovery gas | | Non-permeated gas (*1) | |
|---|---|---|---|---|---|---|---|---|---|---|
| | | Type | $CO_2$ content (vol%) | Flow rate F1 ($Nm^3/h$) | $CO_2$ content (vol%) | Flow rate F2 ($Nm^3/h$) | $CO_2$ content (vol%) | Flow rate F3 ($Nm^3/h$) | $CO_2$ content (vol%) | Flow rate F4 ($Nm^3/h$) |
| Calc. Ex. B4 | FIG. 5 | Air | 0 | 505 | 20 | 2542 | 40 | 1250 | 0.40 | 1805 |
| Calc. Ex. A5 | FIG. 1 | Non-permeated gas | 2.14 | 330 | 20 | 2542 | 50 | 947 | 2.14 | 1595 |
| Calc. Ex. B5 | FIG. 5 | Air | 0 | 325 | 20 | 2542 | 50 | 947 | 2.74 | 1911 |
| (*1) The non-permeated gas discharged through the discharge outlet of the discharge passage | | | | | | | | | | |

[Table 2]

| | Flow rate proportion (%) | | | | $CO_2$ recovery rate (%) | $CO_2$ recovery power (kWh/kg-$CO_2$) | **Required** membrane area ($m^2$) |
|---|---|---|---|---|---|---|---|
| | Sweep gas/non-permeated gas (F1/F4) | Recovery gas/gas mixture (F3/F2) | Sweep gas/ recovery gas (F1/F3) | Sweep gas/gas mixture (F1/F2) | | | |
| Calc. Ex. A1 | 65.8 | 49.5 | 67.1 | 33.2 | 99.1 | 1.25 | 3275 |
| Calc. Ex. B1 | 38.8 | 49.5 | 64.6 | 32.0 | 99.1 | 1.46 | 3537 |
| Calc. Ex. A2 | 14.2 | 18.8 | 61.3 | 11.5 | 75.3 | 1.64 | 1090 |
| Calc. Ex. B2 | 10.8 | 18.8 | 54.0 | 10.2 | 75.3 | 1.75 | 1122 |
| Calc. Ex. A3 | 98.8 | 66.6 | 49.6 | 33.0 | 99.9 | 0.30 | 1015 |
| Calc. Ex. B3 | 49.0 | 66.6 | 47.4 | 31.6 | 99.9 | 0.36 | 1087 |
| Calc. Ex. A4 | 41.2 | 49.2 | 42.6 | 20.9 | 98.4 | 0.31 | 664 |
| Calc. Ex. B4 | 28.0 | 49.2 | 41.0 | 20.1 | 98.4 | 0.35 | 694 |
| Calc. Ex. A5 | 20.7 | 37.2 | 34.9 | 13.0 | 93.3 | 0.33 | 464 |

(continued)

| | Flow rate proportion (%) | | | | CO₂ recovery rate (%) | CO₂ recovery power (kWh/kg-CO₂) | **Required** membrane area (m²) |
|---|---|---|---|---|---|---|---|
| | Sweep gas/non-permeated gas (F1/F4) | Recovery gas/gas mixture (F3/F2) | Sweep gas/ recovery gas (F1/F3) | Sweep gas/gas mixture (F1/F2) | | | |
| Calc. Ex. B5 | 17.0 | 37.2 | 33.3 | 12.4 | 93.3 | 0.35 | 474 |

As can be understood from Tables 1 and 2, under the same gas mixture supply conditions and the same conditions for carbon dioxide recovery using the recovery gas, Calculation Examples A1 to A5 using the gas separation system as shown in FIG. 1 required smaller membrane areas of the separation membranes and smaller recovery powers to achieve the target carbon dioxide recovery rates, compared to Calculation Example B1 to B5. It can be derived from the results shown in Tables 1 and 2 that by using a portion of the non-permeated gas as a sweep gas and recovering the recovery gas containing the permeated gas and the sweep gas, the recovery rate of the separation target component contained in the gas mixture can be easily improved without greatly increasing the membrane area of the separation membrane and thus the gas mixture can be efficiently separated.

(Example 1)

In Example 1, first, the gas separation system 100 as shown in FIG. 1 was actually prepared. A 30 cm-long membrane element in which a carbon dioxide permeable membrane was set was used as the separation membrane unit. For the carbon dioxide permeable membrane, the permeance $T_{CO2}$ of carbon dioxide alone was 120 GPU, and a separation factor $\alpha_{CO2/Air}$ for carbon dioxide with respect to air was 20.

The permeance $T_{CO2}$ of carbon dioxide alone was measured by the following method. First, carbon dioxide having a pressure of 201.33 kPa and a temperature of 25°C is supplied to the space adjacent to the one surface of the carbon dioxide permeable membrane. During this, the pressure of the space adjacent to the other surface of the carbon dioxide permeable membrane is adjusted to 101.33 kPa. Consequently, a permeated fluid (carbon dioxide) having permeated through the carbon dioxide permeable membrane is obtained from the other surface of the carbon dioxide permeable membrane. The flow rate of this permeated fluid is measured using a mass flow meter, and the permeance $T_{CO2}$ (GPU) of carbon dioxide alone is determined from the obtained result.

The separation factor $\alpha_{CO2/Air}$ refers to a ratio $T_{CO2}/T_{air}$ of the permeance $T_{CO2}$ (GPU) of carbon dioxide alone to a permeance $T_{air}$ (GPU) of air alone. The permeance $T_{air}$ of air alone can be measured by the method described above for the permeance $T_{CO2}$ of carbon dioxide alone, except that air at a pressure of 201.33 kPa and a temperature of 25°C is used instead of carbon dioxide.

Next, the gas mixture was supplied to the separation membrane unit, and the gas separation system 100 was operated. In this operation, a portion of the non-permeated gas was used as the sweep gas, and the recovery gas composed of the permeated gas and the sweep gas was recovered. The gas mixture was prepared by mixing carbon dioxide and compressed air, and was supplied under the following supply conditions.

[Gas Mixture Supply Conditions]

    Flow rate: 20 NL/min
    Composition (volume ratio): $CO_2$/Air = 5/95
    Pressure: absolute pressure, 500 kPa
    Temperature: 25°C

The air was regarded as a gas mixture of nitrogen and oxygen ($N_2$/$O_2$ = 80/20 (volume ratio)). Since the compressed air was used, operation of increasing the pressure of the gas mixture using the pressurizing device was not performed in Example 1. The recovery gas had a pressure (absolute pressure) of 101.33 kPa.

For the operation performed in Example 1, the $CO_2$ content in each gas, the flow rate of each gas, the $CO_2$ recovery rate (the proportion of the weight of $CO_2$ in the recovery gas to the weight of $CO_2$ in the gas mixture), and the power (Wh) required to operate the gas separation system were determined. The flow rate of each gas was measured using a flowmeter provided to each passage of the gas separation system 100.

(Comparative Example 1)

In Comparative Example 1, first, the gas separation system 200 as shown in FIG. 5 was actually prepared. The separation membrane unit used was the same as the one in Example 1. Next, under the same conditions as in Example 1, the gas mixture was supplied to the separation membrane unit, and the gas separation system 200 was operated. In this operation, air was used as the sweep gas, and the recovery gas composed of the permeated gas and the sweep gas was recovered. Note that with the use of the pressurizing device provided to the sweep gas feed passage, the pressure of the sweep gas was increased to a level suitable for supplying the gas to the separation membrane unit. The recovery gas had a pressure (absolute pressure) of 101.33 kPa.
For the operation in Comparative Example 1, the $CO_2$ recovery rate and so forth were determined as in Example 1.

(Example 2)

The gas separation system 100 was operated in the same manner as in Example 1, except that the composition (volume ratio) of the gas mixture was changed to $CO_2$/Air = 10/90.

(Comparative Example 2)

The gas separation system 200 was operated in the same manner as in Comparative Example 1, except that the composition (volume ratio) of the gas mixture was changed to $CO_2$/Air = 10/90.

[Table 3]

| | Gas separation system | Sweep gas | | | Gas mixture | | Recovery gas | | Non-permeated gas (*1) | |
|---|---|---|---|---|---|---|---|---|---|---|
| | | Type | $CO_2$ content (vol%) | Flow rate F1 (NL/min) | $CO_2$ content (vol%) | Flow rate F2 (NL/min) | $CO_2$ content (vol%) | Flow rate F3 (NL/min) | $CO_2$ content (vol%) | Flow rate F4 (NL/min) |
| Ex. 1 | FIG. 1 | Non-permeated gas | 3.9 | 2.0 | 5 | 20 | 1.26 | 2.59 | 3.9 | 17.3 |
| Comp. Ex. 1 | FIG. 5 | Air | 0 | 2.0 | 5 | 20 | 11.6 | 2.50 | 3.8 | 19.2 |
| Ex. 2 | FIG. 1 | Non-permeated gas | 7.8 | 2.0 | 10 | 20 | 23.3 | 2.88 | 7.8 | 16.9 |
| Comp. Ex. 2 | FIG. 5 | Air | 0 | 2.0 | 10 | 20 | 21.4 | 2.86 | 7.6 | 18.8 |
| (*1) The non-permeated gas discharged through the discharge outlet of the discharge passage | | | | | | | | | | |

[Table 4]

| | Flow rate proportion (%) | | | | CO$_2$ recovery rate (%) | Power required for operation (Wh) |
|---|---|---|---|---|---|---|
| | Sweep gas/ non-permeated gas (F1/F4) | Recovery gas/gas mixture (F3/F2) | Sweep gas/ recovery gas (F1/F3) | Sweep gas/gas mixture (F1/F2) | | |
| Ex. 1 | 11.6 | 13.0 | 77.2 | 10.0 | 32.6 | 0 |
| Comp. Ex. 1 | 10.4 | 12.5 | 80.0 | 10.0 | 29.0 | 87.2 |
| Ex. 2 | 11.8 | 14.4 | 69.4 | 10.0 | 33.5 | 0 |
| Comp. Ex. 2 | 10.6 | 14.3 | 69.9 | 10.0 | 30.6 | 87.2 |

As can be seen from Tables 3 and 4, Examples using the gas separation system as shown in FIG. 1 achieved higher carbon dioxide recovery rates and smaller powers (Wh) required to operate the gas separation system, compared to Comparative Examples. It can be derived from the results shown in Tables 3 and 4 that the gas mixture can be efficiently separated by using a portion of the non-permeated gas as a sweep gas and recovering the recovery gas containing the permeated gas and the sweep gas.

The flow rates shown in Table 3 reflect small errors of the values measured using the flowmeters.

INDUSTRIAL APPLICABILITY

The gas separation system of the present embodiment is suitable for separating a gas mixture, such as a gas mixture containing carbon dioxide or hydrogen. In particular, the gas separation system of the present embodiment is suitable for processing gases emitted from thermal power generation and emission gases from chemical plants.

**Claims**

1. A gas separation system comprising:

   a separation membrane unit that separates a gas mixture into a permeated gas and a non-permeated gas; and
   a sweep gas feed passage configured to supply a portion of the non-permeated gas to a permeation space of the separation membrane unit as a sweep gas, wherein
   the gas separation system is configured to recover a recovery gas containing the permeated gas and the sweep gas.

2. The gas separation system according to claim 1, wherein a proportion of a flow rate (m$^3$/h) of the sweep gas to a flow rate (m$^3$/h) of the gas mixture supplied to the separation membrane unit is 6.0% or more.

3. The gas separation system according to claim 1, wherein a proportion of a flow rate (m$^3$/h) of the sweep gas to a flow rate (m$^3$/h) of the recovery gas is 19% or more.

4. The gas separation system according to claim 1, wherein

   the gas mixture contains a gas A, and
   the permeated gas has a higher content of the gas A than the non-permeated gas.

5. The gas separation system according to claim 4, wherein a content of the gas A in the gas mixture is 30 vol% or less.

6. The gas separation system according to claim 4, wherein a recovery rate of the gas A by the recovery gas is 70% or more.

7. The gas separation system according to claim 4, wherein the gas A is carbon dioxide or hydrogen.

8. The gas separation system according to claim 1, wherein a content of water vapor in the recovery gas is 1 vol% or less.

9. The gas separation system according to claim 1, further comprising

a discharge passage connected to the separation membrane unit and configured to discharge the non-permeated gas from the separation membrane unit, wherein
the sweep gas feed passage branches from the discharge passage.

10. The gas separation system according to claim 1, further comprising:

a recovery portion configured to recover the recovery gas; and
a recovery passage connected to the separation membrane unit and the recovery portion and configured to deliver the recovery gas to the recovery portion.

11. The gas separation system according to claim 1, further comprising

a gas mixture feed passage connected to the separation membrane unit and configured to supply the gas mixture to the separation membrane unit, wherein
the gas mixture feed passage is provided with a pressurizing device that increases a pressure of the gas mixture.

12. The gas separation system according to claim 1, wherein

the separation membrane unit includes a separation membrane, and
the separation membrane includes a separation functional layer including: a polyether block amide resin; or an ionic liquid.

13. A gas mixture separation method comprising:

supplying a gas mixture to a separation membrane unit to separate the gas mixture into a permeated gas and a non-permeated gas;
supplying a portion of the non-permeated gas to a permeation space of the separation membrane unit as a sweep gas; and
recovering a recovery gas containing the permeated gas and the sweep gas.

100

40      10      13b      32      42      44

30      13a      11      14a      36

14b

34

20

# FIG.1

FIG.2

FIG.3A

FIG.3B

15

81

85

16

17

70

18

75

11

19

FIG.4

FIG.5

**EP 4 782 091 A1**

# INTERNATIONAL SEARCH REPORT

| | International application No. |
|---|---|
| | **PCT/JP2024/033361** |

| A. | CLASSIFICATION OF SUBJECT MATTER |
|---|---|

*B01D 53/22*(2006.01)i; *B01D 65/00*(2006.01)i; *B01D 69/00*(2006.01)i; *B01D 71/56*(2006.01)i; *B01D 71/80*(2006.01)i
FI: B01D53/22; B01D65/00; B01D71/56; B01D69/00 500; B01D71/80

According to International Patent Classification (IPC) or to both national classification and IPC

| B. | FIELDS SEARCHED |
|---|---|

Minimum documentation searched (classification system followed by classification symbols)

B01D53/22; B01D65/00; B01D69/00; B01D71/56; B01D71/80

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | US 2018/0133643 A1 (OHIO STATE INNOVATION FOUNDATION) 17 May 2018 (2018-05-17) claims 1, 7, paragraph [0094], example 3-3, table 12, fig. 1 | 1-11, 13 |
| Y | | 12 |
| Y | WO 2023/176436 A1 (NITTO DENKO CORPORATION) 21 September 2023 (2023-09-21) paragraphs [0053]-[0054] | 12 |
| Y | WO 2020/195911 A1 (NITTO DENKO CORPORATION) 01 October 2020 (2020-10-01) claims 10-11 | 12 |

☐ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **08 November 2024** | **19 November 2024** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

27

**INTERNATIONAL SEARCH REPORT**
**Information on patent family members**

International application No.

**PCT/JP2024/033361**

| Patent document cited in search report | | | Publication date (day/month/year) | Patent family member(s) | | | Publication date (day/month/year) |
|---|---|---|---|---|---|---|---|
| US | 2018/0133643 | A1 | 17 May 2018 | WO | 2016/196056 | A1 | |
| | | | | CN | 107708840 | A | |
| WO | 2023/176436 | A1 | 21 September 2023 | (Family: none) | | | |
| WO | 2020/195911 | A1 | 01 October 2020 | US | 2022/0161185 | A1 | |
| | | | | claims 10-11 | | | |
| | | | | EP | 3950102 | A1 | |
| | | | | CN | 113631245 | A | |
| | | | | KR | 10-2021-0141530 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

• JP 2015536814 A

**Non-patent literature cited in the description**

• **E. KAMIO et al.** *Adv. Mater*, 2017, vol. 29, 1704118